# DEMANDE DE BREVET EUROPEEN

(11) **EP 2 840 716 A2**
(43) Date de publication de la demande: **25.02.2015**
(21) Numéro de dépôt: 14179510.4
(22) Date de dépôt: 01.08.2014
(51) Int. Cl.: H04B 1/00

(54) **Récepteur de signaux air/sol à très haute fréquence, émetteur de signaux à très haute fréquence et procédé de transmission correspondant**

(30) Priorité: 22.08.2013 FR 1358112
(71) Demandeur: Altys Technologies, 31000 Toulouse (FR)
(72) Inventeur: Simonin, Alexandre, 31000 TOULOUSE (FR); Abdo, Kanaan, 31200 TOULOUSE (FR); Ben Slama, Fathia, 31300 TOULOUSE (FR)
(74) Mandataire: Gevers France

(57) **Abrégé**

L'invention concerne un récepteur de signaux d'une bande de très haute fréquence émis par un émetteur, comprenant une antenne (10), un filtre passe-bande (12), une radio logicielle (18) adaptée pour recevoir les signaux filtrés par ledit filtre passe-bande (12) par une première entrée et pour les numériser avec un taux d'échantillonnage prédéterminé dans une bande de fréquence d'échantillonnage prédéterminée, pour obtenir un signal numérisé caractérisé en ce que le récepteur comprend au moins deux modules d'extraction (34, 35, 36, 37) aptes chacun à recevoir le signal numérisé et à extraire dans un canal de fréquence propre une partie du signal numérisé, dit signal extrait, et au moins deux démodulateurs (40, 41, 42, 43) aptes chacun à recevoir un signal extrait et à le démoduler pour en récupérer des données.

L'invention concerne aussi un émetteur de signaux à très haute fréquence et un procédé de transmission correspondant.

## Description

### 1. Domaine technique de l'invention

L'invention concerne un récepteur de signaux air/sol à très haute fréquence, un émetteur de signaux à très haute fréquence et un procédé de transmission correspondant.

### 2. Arrière-plan technologique

Les aéronefs communiquent avec le sol par l'échange de signaux à très haute fréquence, plus connus sous la dénomination anglaise VHF (Very High Frequency). Ces signaux permettent l'échange de données entre les aéronefs et les stations de réception au sol. Ces données sont par exemple des données de trafic, des données d'état des systèmes des aéronefs ou encore des communications entre les pilotes et les contrôleurs aériens. Généralement, l'aéronef envoie ces données par le biais de signaux sur plusieurs canaux de fréquence. Au sol, la réception simultanée de transmissions générées sur ces canaux de fréquences nécessite à ce jour l'utilisation d'autant de récepteurs et d'une unité de calcul pour piloter les récepteurs et pour traiter les données captées par ces récepteurs.

Cette solution possède plusieurs inconvénients, notamment la nécessité de mettre en oeuvre N récepteurs pour capter N canaux. Cette exigence entraine des problèmes de coûts et d'encombrement, chaque récepteur disponible sur le marché mesurant 1U de hauteur, l'unité U correspondant à la taille d'un emplacement dans un rack destiné à stocker les équipements électroniques.

En outre, l'interface radio de chaque récepteur étant fermée, il n'y a pas de remontée d'information détaillée sur le signal physique.

En outre, lors d'une procédure standard de transmission entre un émetteur monté à bord d'un aéronef et un récepteur sol, le récepteur doit indiquer au préalable à l'émetteur sur quel canal de fréquence celui-ci doit émettre le signal à transmettre pour pouvoir être reçu et décodé par le récepteur. Cela pose des problèmes lorsque le canal indiqué par le récepteur est saturé et ne peut donc pas être utilisé par l'émetteur. L'émetteur n'a pas la possibilité d'adapter le canal d'émission.

Il existe donc un besoin de proposer une solution nouvelle permettant la réception et le traitement des signaux VHF échangés entre un aéronef et les stations de réception au sol tout en permettant une adaptation du canal de fréquence utilisé en fonction de la charge des canaux disponibles.

### 3. Objectifs de l'invention

L'invention vise à pallier au moins certains des inconvénients des dispositifs et procédés de transmission VHF de signaux air/sol connus.

L'invention vise à fournir, dans au moins un mode de réalisation de l'invention, un récepteur qui permet de s'affranchir de la nécessité de disposer de plusieurs récepteurs pour la réception de signaux VHF sur plusieurs canaux.

L'invention vise aussi à fournir, dans au moins un mode de réalisation de l'invention, un récepteur adapté pour recevoir une grande quantité de données à traiter en temps réel.

L'invention vise aussi à fournir, dans au moins un mode de réalisation de l'invention, un récepteur adapté pour recevoir les signaux transmis par un émetteur de l'aéronef dans un canal de fréquence non-déterminé à l'avance.

L'invention vise aussi à fournir, dans au moins un mode de réalisation de l'invention, un émetteur adapté pour sélectionner le canal de fréquence à utiliser pour l'envoi de signaux sur des critères propres et non déterminés par le récepteur.

L'invention vise aussi à fournir, un procédé de transmission adapté pour qu'un émetteur puisse envoyer des signaux sur les canaux de fréquence qu'il souhaite et que le récepteur réceptionne ces signaux quelque soient les canaux de fréquences choisis.

### 4. Exposé de l'invention

Pour ce faire, l'invention concerne un récepteur de signaux d'une bande de très haute fréquence émis par un émetteur, comprenant :
- une antenne configurée pour capter les signaux très haute fréquence émis par l'émetteur,
- un filtre passe-bande adapté pour filtrer les signaux reçus par ladite antenne,
- une radio logicielle adaptée pour recevoir les signaux filtrés par ledit filtre passe-bande par une première entrée et pour les numériser avec un taux d'échantillonnage prédéterminé dans une bande de fréquence d'échantillonnage prédéterminée, pour obtenir un signal numérisé caractérisé en ce que le récepteur comprend :
- au moins deux modules d'extraction aptes chacun à recevoir le signal numérisé et à extraire dans un canal de fréquence propre une partie du signal numérisé, dit signal extrait, et
- au moins deux démodulateurs aptes chacun à recevoir un signal extrait et à le démoduler pour en récupérer des données.

Dans toute la suite, l'invention est décrite en lien avec une transmission entre un émetteur monté à bord d'un aéronef et un récepteur situé au sol. Aussi, les termes aéronef et émetteurs sont utilisés pour désigner l'émetteur situé dans un aéronef. Néanmoins, l'invention ne saurait se limiter à une unique transmission air/sol entre un aéronef et une station au sol, mais peut aussi être utilisé pour les transmissions venant de plusieurs aéronefs, ou pour des transmissions d'une station au sol vers un aéronef.

Un récepteur selon l'invention permet donc une réception par un seul récepteur de plusieurs signaux différents envoyés par l'aéronef et captés par l'antenne sur la bande de très haute fréquence. La radio logicielle permet de réunir tous les signaux envoyés dans la bande VHF et filtrés par le filtre passe bande en un seul signal numérique qui sera ensuite traité parallèlement par plusieurs modules d'extraction et démodulateurs. Ce traitement parallèle permet en outre de réduire le débit du signal que reçoit chaque module d'extraction et chaque démodulateur. Un récepteur selon l'invention permet donc de remplir les fonctions de plusieurs récepteurs monocanal de l'art antérieur. L'encombrement d'un récepteur selon l'invention est donc réduit et le coût de fabrication est inférieur à celui de plusieurs récepteurs monocanal. En outre, le traitement parallèle des signaux extraits permet d'atteindre un traitement en temps réel d'une grande quantité de données. De plus, dans le cadre d'une transmission entre un émetteur et un récepteur selon l'invention, la réception des signaux dans une large bande de fréquence permet de réceptionner les signaux envoyés par l'émetteur dans un canal particulier de fréquence, sans avoir à déterminer à l'avance le canal qui sera utilisé pour la transmission. En d'autres termes, l'émetteur envoie un signal dans le canal de fréquence qu'il souhaite, en fonction notamment des disponibilités des différents canaux pour effectuer la transmission, et le récepteur réceptionne dans une large bande de fréquence qui contient ce canal de fréquence et donc récupère l'information. Cela permet à l'émetteur de choisir le canal de fréquence qu'il souhaite pour éviter par exemple les saturations de certains canaux trop fréquemment utilisés, tout en étant assuré que le récepteur captera les signaux envoyés dans cette fréquence puisque ledit récepteur capte les signaux sur une large bande de fréquence. De plus, le récepteur selon l'invention n'a plus à transmettre de consigne de fréquence de transmission.

Selon une variante, le récepteur peut lui-même établir la saturation des différents canaux car il a accès à l'information de charge des canaux en captant toute la bande de fréquence. Dans ce cas, le récepteur peut transmettre à l'émetteur la consigne d'utiliser une fréquence de transmission peu utilisée. Cela permet en outre d'être totalement compatible avec les émetteurs existants tout en améliorant la transmission.

Avantageusement et selon l'invention, le nombre de modules d'extraction est égal au nombre de démodulateurs.

Un récepteur selon cette variante permet de disposer de plusieurs lignes de traitement parallèle, chaque ligne traitant un canal de fréquence prédéterminé.

Selon d'autres variantes, un démodulateur peut être associé à plusieurs modules d'extraction et plusieurs démodulateurs peuvent être associés à un module d'extraction.

Avantageusement et selon l'invention, le taux d'échantillonnage est prédéterminé en fonction de la vitesse de démodulation des démodulateurs et du rapport de réduction de débit d'un module d'extraction, de sorte à optimiser ledit taux d'échantillonnage pour permettre un fonctionnement en temps réel des démodulateurs et pour conserver l'intégrité des données.

Pour récupérer toutes les données provenant de l'aéronef et analyser efficacement et rapidement le contenu de ces données, il est nécessaire que les démodulateurs aient un fonctionnement en temps réel de sorte que les données soient traitées dans un temps imparti et que les démodulateurs ne prennent pas de retard sur le traitement des signaux. Ainsi, le récepteur dans son ensemble est adapté pour permettre un traitement temps réel par les démodulateurs. Cette adaptation du récepteur est d'autant plus importante que la numérisation d'une bande de fréquence par la radio logicielle entraine le regroupement de tous les signaux de la bande dans un unique signal numérisé d'un débit important. Ce débit est d'autant plus important qu'il est nécessaire de préserver un haut taux d'échantillonnage lors de la numérisation afin de préserver un maximum d'informations des signaux filtrés lors de la numérisation pour conserver l'intégrité des données récupérées en sortie des démodulateurs. Le calcul du taux d'échantillonnage répond alors à ces deux contraintes pour optimiser le taux d'échantillonnage : être suffisamment élevé pour conserver le maximum d'informations lors de la numérisation des signaux filtrés et donc conserver au final l'intégrité des données provenant de ces signaux, et rester suffisamment faible pour que les démodulateurs traitent les signaux extraits en temps réel.

Selon cet aspect de l'invention, la maximisation du taux d'échantillonnage permet de s'assurer qu'il n'y aura pas ou peu de pertes de signal (et donc au final de données) lors de la numérisation des signaux reçus par l'antenne. La numérisation d'une large bande de fréquence donnant un nombre important de données, le taux d'échantillonnage est déterminé en fonction des éléments composant le récepteur pour que les démodulateurs puissent travailler en temps réel. Cette détermination se fait par exemple selon cette fonction : le débit maximum en sortie de la radio logicielle est égal au produit du débit maximum en entrée d'un démodulateur parmi N pour fonctionnement temps réel et du rapport de réduction de débit d'un module d'extraction. Le rapport de réduction de débit d'un module d'extraction correspond au rapport débit réduit sur débit entrant d'un module d'extraction. Avec le débit exprimé en bits par secondes, la division de ce débit maximum par le nombre de bits de codage donne le taux d'échantillonnage en nombres d'échantillons par seconde. Un taux d'échantillonnage plus élevé que le taux maximum d'échantillonnage calculé selon la fonction engendre un signal numérique avec un débit trop élevé et les démodulateurs ne peuvent pas traiter suffisamment rapidement les signaux extraits sortant des modules d'extraction pour satisfaire aux exigences temps réel de ce type d'équipement.

Avantageusement et selon l'invention, chaque module d'extraction comprend un premier sous-module apte à translater la fréquence centrale du signal numérisé de sorte que la fréquence centrale de chaque signal extrait soit égale à une fréquence Fe identique pour tous les modules en sortie des modules d'extraction, et à filtrer le signal numérisé translaté.

Selon cet aspect de l'invention, l'extraction du signal numérisé en signal extrait se fait grâce à une translation puis un filtrage. Cette extraction dans un canal de fréquence propre du signal numérisé permet au récepteur de récupérer un signal envoyé par l'émetteur sans connaître à l'avance le canal de fréquence que l'émetteur a choisi pour sa transmission. Outre l'extraction dans un canal de fréquence propre du signal numérisé, le filtrage permet aussi de réduire le débit de données en sortie du module d'extraction. La translation de fréquence puis le filtrage dudit signal numérisé vers une fréquence Fe identique pour tous les modules en sortie des modules d'extraction permet aux démodulateurs de tous travailler sur des signaux extraits de même fréquence Fe.

Avantageusement et selon l'invention, au moins un module d'extraction comprend un deuxième sous-module apte à détecter le type de signal extrait et réduire le débit de données en sortie en fonction du type de signal détecté.

Selon cet aspect de l'invention, la détection du type de signal permet au sous-module d'effectuer un traitement supplémentaire du signal afin de réduire le débit en sortie du module d'extraction. En effet, la connaissance du type de signal extrait permet par exemple de réduire le taux d'échantillonnage si cela n'affecte pas le signal afin de réduire le débit sortant.

Avantageusement et selon l'invention, le premier sous-module et le deuxième sous-module sont configurés pour fonctionner en parallèle et pour communiquer l'un avec l'autre.

Selon cet aspect de l'invention, le traitement est plus rapide et il n'y a pas de blocage si les deux sous-modules ne traitent pas le signal à la même vitesse. De plus, chaque sous-module peut adapter son traitement en fonction de l'autre sous-module.

Avantageusement et selon l'invention, le récepteur comprend une deuxième antenne configurée pour capter les signaux d'une deuxième bande de fréquence et en ce que ladite radio logicielle comprend une deuxième entrée adaptée pour recevoir ces signaux, ladite radio logicielle étant configurée pour numériser lesdits signaux de la deuxième bande dans le signal numérisé avec les signaux reçus par la première entrée.

Selon cet aspect de l'invention, le récepteur peut récupérer des signaux présents dans une deuxième bande différente de la bande de très haute fréquence. Par différente on entend une bande de fréquence qui contient au moins une fréquence qui n'est pas comprise dans la bande de très haute fréquence captée par la première antenne. La radio logicielle numérise ensuite les signaux de cette deuxième bande dans le même signal numérisé que les signaux de la bande de très haute fréquence, afin de traiter tous les signaux ensemble.

Avantageusement et selon l'invention, le récepteur comprend un module de translation adapté pour translater les signaux de la deuxième bande de fréquence vers une fréquence comprise dans ladite bande d'échantillonnage de la radio logicielle et pour transmettre les signaux translatés à la deuxième entrée de la radio logicielle.

Selon cet aspect de l'invention, les signaux captés par la deuxième antenne sont translatés vers une fréquence comprise dans la bande d'échantillonnage de la radio logicielle afin de pouvoir échantillonner les signaux de la bande de très haute fréquence et de la deuxième bande ensemble. Cette translation permet de conserver une bande d'échantillonnage étroite ce qui augmente la qualité de l'échantillonnage représentée notamment par l'augmentation du rapport signal sur bruit, ou l'acronyme SNR pour les termes anglais *Signal-to-Noise Ratio.*

Avantageusement et selon l'invention, le récepteur comprend au moins quatre modules d'extraction et au moins quatre démodulateurs, de sorte que ledit récepteur puisse capter les fréquences sur au moins quatre canaux.

Selon cet aspect de l'invention, le récepteur peut capter les fréquences sur au moins quatre canaux correspondant à par exemple au moins quatre canaux VDL2 sur lesquels émet généralement un aéronef, et les traiter de façon parallèle.

De préférence, le récepteur comprend six modules d'extraction et six démodulateurs, de sorte que ledit récepteur puisse capter les fréquences sur six canaux.

Avantageusement et selon l'invention, la radio logicielle, les modules d'extraction et les démodulateurs, sont adaptés pour communiquer les uns avec les autres par un protocole de transport fiable en mode connecté, c'est-à-dire avec l'établissement d'une connexion préalable au transport de données, permettant de supporter une architecture distribuée entre plusieurs unités de calculs.

Avantageusement et selon l'invention, la radio logicielle, les modules d'extraction et les démodulateurs, sont adaptés pour communiquer les uns avec les autres par un protocole de transport TCP.

Selon cet aspect de l'invention, les communications se font selon un protocole de transport qui permet de vérifier la disponibilité de la partie qui reçoit l'information avant le transfert grâce à la poignée de main (en anglais handshake), et d'assurer un échange fiable grâce à la vérification d'erreurs. La fiabilité du protocole permet un traitement distribué sur plusieurs ordinateurs ou un traitement de secours en cas de panne sur un des modules.

L'invention concerne aussi un procédé de réception de signaux d'une bande de très haute fréquence émis par un émetteur, comprenant :
- une étape de réception des signaux très haute fréquence émis par l'émetteur,
- une étape de filtrage passe-bande du signal réceptionné à l'étape de réception,
- une étape de numérisation à haut taux d'échantillonnage du signal filtré à l'étape de filtrage pour obtenir un signal numérisé,
caractérisé en ce qu'il comprend :
- au moins deux étapes d'extraction du signal numérisé, lesdites étapes d'extraction étant exécutées en parallèle, chacune des étapes d'extraction consistant à extraire dans un canal de fréquence propre une partie du signal numérisé dit signal extrait, et
- au moins deux étapes de démodulation exécutées en parallèle, chacune étant exécutée à la suite d'une étape d'extraction et consistant à démoduler un signal extrait pour en récupérer les données.

Un procédé de réception selon l'invention permet donc la réception de plusieurs signaux sur une bande de fréquence et peut réunir tous les signaux envoyés et filtrés de la bande VHF en un seul signal numérique qui sera ensuite extrait puis démodulé pour des traitements parallèles.

Un procédé de réception selon l'invention est avantageusement mis en oeuvre par un récepteur selon l'invention. Un récepteur selon l'invention met avantageusement en oeuvre un procédé de réception selon l'invention.

L'invention concerne aussi un émetteur de signaux air/sol de très haute fréquence destiné à la mise en oeuvre d'un procédé de transmission selon l'invention comprenant :
- un transmetteur adapté pour désigner une fréquence de transmission,
- un module de communication adapté pour recevoir une requête de transmission dudit transmetteur à ladite fréquence de transmission désignée,
caractérisé en ce que ledit module de communication comprend un sous-module de détermination de la disponibilité des fréquences de transmission et un sous-module d'émission de signaux air/sol adapté pour émettre lesdits signaux à une fréquence :
- égale à la fréquence de transmission désignée si celle-ci est valide,
- égale à une fréquence définie par ledit sous-module de détermination si la fréquence de transmission désignée n'est pas valide, ledit choix étant effectué en fonction de la disponibilité des fréquences de transmission.

On entend par « fréquence de transmission valide » une fréquence qui fait partie des fréquences autorisées par le standard pour ce type de communication. Par exemple, dans le cadre d'une transmission selon le standard ICAO 9776, les fréquences allouées dans lesquelles l'émetteur peut transmettre sont : 136,975 MHz, 136,925 MHz, 136,875 MHz, 136,825 MHz, 136,775 MHz et 136,725 MHz.

Un émetteur selon l'invention s'affranchit donc de toute communication préalable avec le récepteur pour le choix de la fréquence de transmission. Ainsi, le choix de la fréquence de transmission peut être effectué selon des critères adaptés à la situation courante de l'émetteur : par exemple, il est fréquent qu'un canal de fréquence soit privilégié par plusieurs émetteurs ce qui provoque une saturation de ce canal de fréquence. Aussi, certaines des fréquences de transmission valides sont peu utilisées en pratique et donc pourraient être utilisées en lieu et place des fréquences saturées. Le choix de la fréquence de transmission au niveau de l'émetteur permet de réguler ces saturations en choisissant un canal qui n'est pas saturé. En outre, le transmetteur est l'élément qui désigne une fréquence de transmission pour la transmission. Si cette fréquence désignée est valide, alors le module de communication va transmettre directement les signaux en utilisant cette fréquence. Si au contraire cette fréquence désignée n'est pas valide, le module de communication est chargé de choisir la fréquence de transmission, soit aléatoirement, soit en tenant compte de la saturation des fréquences, soit en fonction de l'historique de l'utilisation des fréquences, etc. La vérification au préalable de la validité de la fréquence permet une compatibilité totale avec les récepteurs au sol existants. Le fait que ce choix soit fait seulement si la fréquence de transmission désignée n'est pas valide permet d'adapter le système aux récepteurs au sol de l'état de la technique : un transmetteur existant va transmettre une fréquence valide, qui a été, selon les standards actuels, désignée après une communication avec un récepteur. Le module de communication va alors transmettre en utilisant cette fréquence valide.

Avantageusement, l'émetteur selon l'invention est utilisé avec un récepteur selon l'invention. Le récepteur selon l'invention peut superviser la disponibilité des fréquences de transmission utilisables, l'émetteur émet donc avec la fréquence de transmission en tenant compte des disponibilités des fréquences de transmission, et le récepteur en face capte les signaux envoyés quelle que soit la fréquence utilisée par l'émetteur. Si le récepteur au sol est un récepteur selon l'invention, il pourra ne pas imposer de fréquence de transmission, laissant le choix de la fréquence au module de communication : le transmetteur pourra désigner une fréquence de transmission non-valide, par exemple égale à zéro, et le module de communication en déduira qu'il doit effectuer lui-même le choix de fréquence de transmission. Ce choix de fréquence de transmission est avantageusement fait en fonction de la disponibilité de la fréquence de transmission, pour éviter les saturations d'une fréquence de transmission alors que plusieurs fréquences sont autorisées par le standard. Selon une variante de l'invention, la fréquence de transmission est choisie en fonction de l'historique d'utilisation des fréquences autorisées.

L'invention concerne aussi un procédé de transmission de signaux de très haute fréquence, comprenant :
- une étape de choix d'une fréquence de transmission,
- une étape d'émission de signaux à ladite fréquence de transmission choisie,
- une étape de réception des signaux,
caractérisé en ce que ladite étape de réception des signaux est effectuée selon le procédé de réception selon l'invention.

Un procédé de transmission selon l'invention permet donc une transmission des signaux dans laquelle la fréquence de transmission est choisie avant l'émission, afin que cette fréquence de transmission choisie soit la mieux adaptée au vu de contraintes liées à ce type de communication, comme par exemple des interférences d'émetteurs voisins, des canaux de fréquences surchargés, etc. La réception du signal est faite pour s'adapter à la fréquence de transmission choisie, sans connaissance au préalable de cette fréquence de transmission.

Avantageusement, le procédé de transmission est mis en oeuvre par l'émetteur et le récepteur selon l'invention.

Avantageusement, l'émetteur et le récepteur selon l'invention mettent en oeuvre le procédé selon l'invention.

L'invention concerne également un procédé, un émetteur et un récepteur caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une représentation schématique d'un aéronef et d'un récepteur selon un mode de réalisation de l'invention.
- la figure 2 est une représentation schématique du fonctionnement de l'émetteur et des modules et des démodulateurs du récepteur selon un mode de réalisation de l'invention.

### 6. Description détaillée d'un mode de réalisation de l'invention

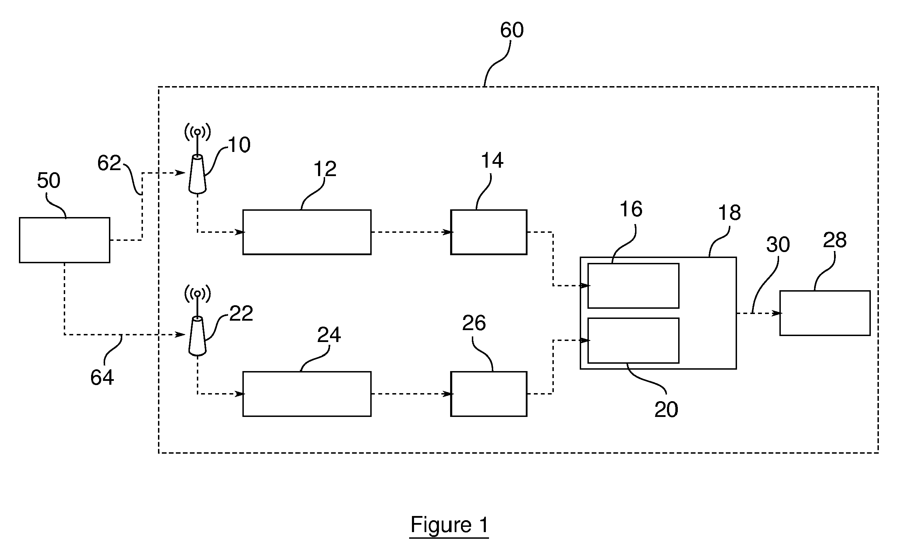

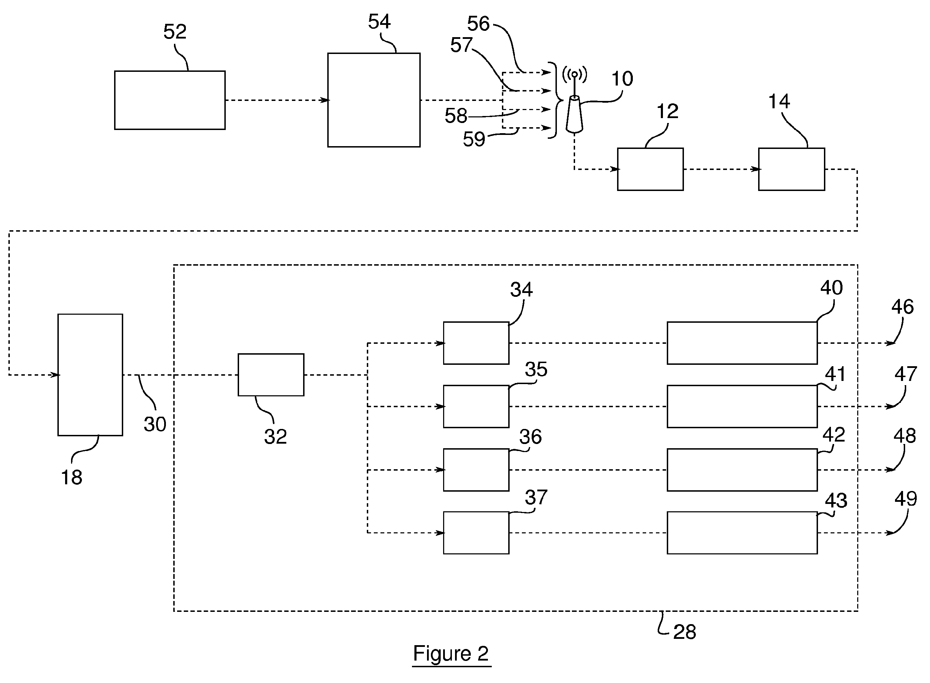

La figure 1 représente un aéronef 50 ainsi qu'un récepteur 60 selon un mode de réalisation de l'invention. L'aéronef 50 transmet des signaux VHF 62 au récepteur 60 grâce à un émetteur selon un mode de réalisation de l'invention détaillé dans la figure 2. Parallèlement, l'aéronef peut aussi transmettre d'autres signaux 64 d'une bande de fréquence différente grâce à un émetteur non représenté.

Le récepteur 60 comprend une première antenne 10 qui reçoit un signal 62, reliée à un filtre passe-bande 12 multi-canal de type SAW (pour Surface Acoustic Wave) et de fréquence centrale Fc. Le signal à la sortie du filtre est amplifié par un amplificateur faible bruit LNA 14 (pour Low Noise Amplifier). Le signal ainsi amplifié est transmis à une première entrée 16 d'une carte radio logicielle 18. La carte radio logicielle 18 peut être réalisée grâce à une carte radio logicielle SDR (pour Software-Defined Radio) telle que la carte TVRX2 commercialisée par Ettus Research. La carte radio logicielle 18 numérise le signal avec un taux d'échantillonnage T et dans une bande d'échantillonnage Be.

La carte radio logicielle 18 est équipée d'une deuxième entrée 20 qui peut, dans un mode de réalisation de l'invention, recevoir des signaux d'une deuxième bande de fréquence destinés à être numérisés avec les signaux captés par la première antenne 10. Ces signaux d'une deuxième bande de fréquence sont captés par une deuxième antenne 22 et transmis à un module de translation 24 qui va permettre la translation de la fréquence principale du signal pour que celle-ci se trouve dans la bande d'échantillonnage Be de la carte radio logicielle 18. Ainsi, tous les signaux reçus par la carte radio logicielle 18 se trouvent dans une bande d'échantillonnage prédéfinie et étroite, ce qui améliore le rapport signal sur bruit du signal numérisé. Le signal ainsi translaté est transmis à un amplificateur faible bruit 26 puis à la deuxième entrée 20 de la carte radio logicielle 18.

Dans ce mode de réalisation, la première antenne 10 capte des signaux VHF 62 émis par un aéronef 50. Ces signaux sont par exemple des signaux VDL2 (pour VHF Data Link Mode 2), un standard défini par l'ICAO (International Civil Aviation Organization). La deuxième antenne 22 capte par exemple un signal du système de surveillance ADS-B (pour Automatic Dépendent Surveillance-Broadcast). Un des signaux disponibles pour ce système ADS-B est le signal 1090ES (pour Extended Squitter) dont la fréquence d'émission est 1090 MHz. Le module de translation 24 permet de translater cette fréquence vers une fréquence intermédiaire de 465 MHz ce qui permet de se retrouver dans la bande d'échantillonnage de la carte radio logicielle 18 choisie qui s'étend de 50 MHz à 860 MHz.

Une fois le signal numérisé par la carte radio logicielle 18, ce signal est transmis directement à une unité de traitement de signal 28, par exemple un PC, décrite plus précisément en lien avec la figure 2. Cette unité de traitement 28 peut-être aussi par exemple un DSP. La connexion entre la carte radio logicielle 18 et l'unité de traitement 28 se fait par une connexion Gigabit Ethernet 30 capable de transmettre le signal numérisé avec un débit important à ce stade du traitement.

La figure 2 représente schématiquement le fonctionnement d'un mode de réalisation de l'émetteur de signaux VHF et d'un mode de réalisation du récepteur avec des détails supplémentaires sur l'unité de traitement 28.

Selon un mode de réalisation de l'émetteur, celui-ci comprend un transmetteur 52, ainsi qu'un module de communication 54. Dans un système de l'art antérieur, le transmetteur constitue la seule partie intelligente du système, qui se charge d'envoyer au module de communication des requêtes de transmission que ledit module de communication émet alors. Le transmetteur définit aussi une fréquence de transmission pour l'envoi du signal, et le module de communication utilise cette fréquence pour émettre le signal.

Dans ce mode de réalisation de l'invention, le transmetteur 52 définit une fréquence de transmission pour l'envoi du signal, et le module de communication 54 choisit ensuite la fréquence d'émission sur lequel il va émettre, sans que le transmetteur 52 ne soit informé de ce choix. Ainsi, le module de communication 54 vérifie la validité de la fréquence de transmission définie par le transmetteur 52, c'est-à-dire vérifie si cette fréquence définie fait partie des fréquences définies par le standard de communication utilisé pour ce type de signal. Si la fréquence de transmission est valide, le module de communication 54 émet à cette fréquence de transmission définie. Dans ce cas de figure, un émetteur selon l'invention a un comportement identique à un émetteur de l'état de la technique. Si la fréquence de transmission n'est pas valide, par exemple si le transmetteur 52 définit comme valeur zéro, le module de communication 54 choisit la fréquence de transmission selon un procédé décrit ci-après :
- recherche des fréquences libres, sur lesquelles aucune transmission n'est en cours,
- sélection d'une fréquence de transmission par tirage aléatoire,
- vérification de la validité de transmission : si elle est valide, le module de communication 54 transmet avec cette fréquence de transmission, sinon le module de communication 54 réeffectue le tirage jusqu'à la sélection d'une fréquence valide.

Dans un mode de réalisation alternatif, la sélection de fréquence peut se faire de façon non-aléatoire dans une liste ordonnée selon l'historique d'utilisation des fréquences de transmission, afin de privilégier les canaux les moins utilisés. Alternativement encore, la sélection de fréquence peut se faire de façon non-aléatoire selon la saturation des différentes fréquences de transmission.

Une fois la fréquence de transmission sélectionnée, le module de communication envoie le signal avec cette fréquence. Le choix de la fréquence de transmission avant chaque émission engendre au fil du temps l'émission de plusieurs signaux à différentes fréquences 56, 57, 58 et 59. L'antenne 10 du récepteur capte une large bande de fréquence et reçoit donc tous les signaux 56, 57, 58 et 59, quelles que soit leurs fréquences de transmission pourvu qu'elles soient valides.

La fonction de l'unité de traitement 28 du récepteur selon un mode de réalisation de l'invention est de récupérer les données contenues dans le signal numérisé. Les signaux provenant de l'aéronef, ces données peuvent être des données de position, d'avionique, des messages, et autres informations concernant l'aéronef 50. L'unité de traitement 28 comprend un pilote 32, des modules d'extraction 34, 35, 36, 37 et des démodulateurs 40, 41, 42, 43. Dans la suite de la description, un unique module d'extraction sera désigné par la référence 34 et un unique démodulateur sera désigné par la référence 40, sans que cela limite les caractéristiques des autres modules d'extractions ou démodulateurs qui ont des caractéristiques analogues. La carte radio logicielle 18 est connectée à l'unité de traitement 28 par la connexion Gigabit Ethernet 30 qui est traitée par le pilote 32. Le pilote 32 sert à réceptionner le signal numérisé reçu et opérer les transformations éventuelles pour permettre le traitement de ce signal numérisé par les composants logiciels de l'unité de traitement 28. Ainsi, le pilote 32 transmet, en utilisant le protocole TCP, le signal numérisé aux quatre modules d'extraction 34, 35, 36, 37, qui ont pour fonction d'extraire un signal extrait d'un canal de fréquence du signal numérisé. En effet, la numérisation des signaux de la bande très haute fréquence a créé un seul signal numérisé comprenant tous les signaux reçus. Le module d'extraction 34 a alors pour rôle d'extraire chaque signal du signal numérisé.

Un module d'extraction 34 est divisé en deux sous-modules : un premier sous-module effectue une translation de la fréquence du canal d'intérêt. A la suite de cette translation le premier sous module effectue un filtre numérique configuré pour extraire le signal. La translation et le filtrage ont pour but que tous les signaux extraits aient la même fréquence centrale, afin que les démodulateurs 40, 41, 42, 43 reçoivent des signaux ayant tous la même fréquence centrale. En pratique, les fréquences centrales des signaux extraits sont ramenées à la fréquence Fe = Fc = 0.

Le deuxième sous-module analyse le signal extrait pour en déterminer le type. Cette analyse peut par exemple consister en une détection d'une séquence d'identification du signal.

Les deux sous-modules exécutent leurs tâches en parallèle : le premier sous-module traite un signal et stocke le résultat du traitement dans une pile dans laquelle le deuxième sous-module récupère ces résultats pour effectuer son traitement.

En sortie, le module d'extraction 34 transmet un signal extrait aux démodulateurs 40, 41, 42, 43 en utilisant le protocole TCP. Selon un mode de réalisation de l'invention, les modules d'extraction 34, 35, 36, 37 et les démodulateurs 40, 41, 42, 43 se suivent en chaîne, c'est-à-dire qu'il y a un démodulateur associé à un module d'extraction qui traite seulement le signal extrait provenant d'un module d'extraction.

Alternativement, un module d'extraction 34 peut être relié à plusieurs démodulateurs adaptés pour traiter le signal extrait provenant du module d'extraction 34, et un démodulateur 40 peut être relié à plusieurs modules d'extraction. Cela permet une meilleure gestion des ressources puisqu'il est possible de répartir les signaux extraits en fonction des disponibilités des démodulateurs 40, 41, 42, 43.

Les démodulateurs 40, 41, 42, 43 traitent les signaux extraits et en récupèrent les données, qui peuvent être selon le signal récupéré des données sur l'aéronef type avionique, des données de position, des données voix, etc. Chaque démodulateur est adapté pour traiter un ou plusieurs types de signaux pour en récupérer les données. Les modulations couramment rencontrées dans les signaux envoyés par l'aéronef sont par exemple des modulations QPSK, D8PSK, etc. Les données sont récupérées par des dispositifs de traitement non représentés grâce aux sorties 46, 47, 48, 49.

Dans un mode de réalisation alternatif, le récepteur peut obtenir les informations sur la saturation des canaux de fréquences, par exemple au niveau des modules d'extraction 34, 35, 36, 37, des démodulateurs 40, 41, 42, 43 ou des sorties 46, 47, 48, 49, et transmettre à un émetteur de l'état de la technique une consigne d'utilisation de fréquence de transmission. Ainsi, le récepteur selon l'invention est compatible avec les émetteurs de l'état de la technique qui ne font pas de choix de la fréquence de transmission, ce qui permet une amélioration de la transmission même si l'émetteur n'est pas un émetteur selon l'invention.

Ainsi plusieurs éléments du récepteur permettent d'effectuer une réduction de débit.

En premier lieu, c'est les modules d'extraction 34, 35, 36, 37 qui entraînent la première baisse de débit du signal à traiter.

La réduction de débit vient du premier sous-module : le filtre du premier sous-module a pour but de conserver du signal numérisé seulement le canal de fréquence relatif au signal que l'on souhaite extraire. Cette sélection du canal de fréquence permet d'effectuer une réduction de débit à la sortie du premier sous-module, puisqu'il sort du sous-module qu'une partie du signal numérisé.

Le second sous-module, quant à lui, permet une réduction de débit grâce à une détection du type de signal. Si le deuxième sous-module détecte que le type de signal permet une réduction de débit, il peut effectuer cette réduction. Par exemple, le deuxième sous-module peut détecter que le taux d'échantillonnage peut être réduit sans perdre les données du signal et donc réduire celui-ci afin de réduire le débit en sortie du module d'extraction 34.

Tous ces éléments réduisent le débit du signal reçu par les démodulateurs 40, 41, 42, 43. Pour que les démodulateurs 40, 41, 42, 43 puissent travailler en temps réel, le taux d'échantillonnage de la carte radio logicielle 18 peut être choisi en fonction des différentes réductions du débit énoncées précédemment. Par exemple, on étudie le cas dans un récepteur comprenant quatre démodulateurs 40, 41, 42, 43 et où chaque démodulateur est limité à 0.67Mbits/s comme débit maximum en entrée pour fonctionner en temps réel. Le calcul prend en compte le rapport débit réduit sur débit entrant d'un module d'extraction. Pour un rapport débit réduit sur débit entrant d'un module d'extraction de 28, on obtient 0.67Mbits/s*28 = 18.8 Mbits/s, soit un taux d'échantillonnage de 294 KSamples/sec pour un codage sur 64 bits.

Selon un mode de réalisation du procédé de transmission selon l'invention, le sous-module de détermination choisit une fréquence de transmission en fonction de la requête de transmission du transmetteur, de la disponibilité des fréquences de transmission, de l'historique d'utilisation des fréquences de transmission ou aléatoirement, puis le sous-module d'émission émet à cette fréquence choisie. Le récepteur 60 n'a pas de connaissance à priori sur la fréquence de transmission des signaux émis, mais reçoit les signaux 56, 57, 58, 59 grâce à son antenne 10 qui capte les signaux VHF. Le récepteur 60 numérise tous les signaux, et les extrait ensuite dans leur canal de fréquence pour les démoduler et récupérer les données envoyées par l'émetteur de l'aéronef 50.

L'invention ne se limite pas aux seuls modes de réalisation décrits. En particulier, le récepteur peut être situé dans une station au sol ou un aéronef, recevoir des signaux d'un émetteur ou de plusieurs émetteur, etc. L'émetteur peut être situé dans un aéronef ou une station au sol, envoyer ses signaux à un ou plusieurs récepteurs, etc.

## Revendications

1. Récepteur de signaux d'une bande de très haute fréquence émis par un émetteur, comprenant :
- une antenne (10) configurée pour capter les signaux très haute fréquence émis par l'émetteur,
- un filtre passe-bande (12) adapté pour filtrer les signaux reçus par ladite antenne (10),
- une radio logicielle (18) adaptée pour recevoir les signaux filtrés par ledit filtre passe-bande (12) par une première entrée (16) et pour les numériser avec un taux d'échantillonnage prédéterminé dans une bande de fréquence d'échantillonnage prédéterminée, pour obtenir un signal numérisé
**caractérisé en ce que** le récepteur comprend :
- au moins deux modules d'extraction (34, 35, 36, 37) aptes chacun à recevoir le signal numérisé et à extraire dans un canal de fréquence propre une partie du signal numérisé, dit signal extrait, et
- au moins deux démodulateurs (40, 41, 42, 43) aptes chacun à recevoir un signal extrait et à le démoduler pour en récupérer des données.

2. Récepteur selon la revendication 1, **caractérisé en ce que** le taux d'échantillonnage est prédéterminé en fonction de la vitesse de démodulation des démodulateurs et du rapport de réduction de débit d'un module d'extraction, de sorte à optimiser ledit taux d'échantillonnage pour permettre un fonctionnement en temps réel des démodulateurs (40, 41, 42, 43) et pour conserver l'intégrité des données.

3. Récepteur selon l'une des revendications précédentes, **caractérisé en ce que** chaque module d'extraction (34, 35, 36, 37) comprend un premier sous-module apte à translater la fréquence centrale du signal numérisé de sorte que la fréquence centrale de chaque signal extrait soit égale à une fréquence Fe identique pour tous les modules en sortie des modules d'extraction, et à filtrer le signal numérisé translaté.

4. Récepteur selon la revendication 3, **caractérisé en ce qu'**au moins un module d'extraction (34, 35, 36, 37) comprend un deuxième sous-module apte à détecter le type de signal extrait et réduire le débit de données en sortie en fonction du type de signal détecté.

5. Récepteur selon la revendication 4, **caractérisé en ce que** le premier sous-module et le deuxième sous-module sont configurés pour fonctionner en parallèle et pour communiquer l'un avec l'autre.

6. Récepteur selon l'une des revendications précédentes, **caractérisé en ce qu'**il comprend une deuxième antenne (22) configurée pour capter les signaux d'une deuxième bande de fréquence et **en ce que** ladite radio logicielle (18) comprend une deuxième entrée (20) adaptée pour recevoir ces signaux, ladite radio logicielle (18) étant configurée pour numériser lesdits signaux de la deuxième bande dans le signal numérisé avec les signaux reçus par la première entrée.

7. Récepteur selon la revendication 6, **caractérisé en ce qu'**il comprend un module de translation (24) adapté pour translater les signaux de la deuxième bande de fréquence vers une fréquence comprise dans ladite bande d'échantillonnage de la radio logicielle (18) et pour transmettre les signaux translatés à la deuxième entrée (20) de la radio logicielle (18).

8. Récepteur selon l'une des revendications précédentes, **caractérisé en ce qu'**il comprend au moins quatre modules d'extraction (34, 35, 36, 37) et au moins quatre démodulateurs (40, 41, 42, 43), de sorte que ledit récepteur puisse capter les fréquences sur au moins quatre canaux.

9. Récepteur selon l'une des revendications précédentes, **caractérisé en ce que** la radio logicielle, les modules d'extraction (34, 35, 36, 37) et les démodulateurs (40, 41, 42, 43), sont adaptés pour communiquer les uns avec les autres par un protocole de transport TCP.

10. Procédé de réception de signaux d'une bande de très haute fréquence émis par un émetteur, comprenant :
- une étape de réception des signaux très haute fréquence émis par l'émetteur,
- une étape de filtrage passe-bande du signal réceptionné à l'étape de réception,
- une étape de numérisation à haut taux d'échantillonnage du signal filtré à l'étape de filtrage pour obtenir un signal numérisé,
**caractérisé en ce qu'**il comprend :
- au moins deux étapes d'extraction du signal numérisé, lesdites étapes d'extraction étant exécutées en parallèle, chacune des étapes d'extraction consistant à extraire dans un canal de fréquence propre une partie du signal numérisé dit signal extrait, et
- au moins deux étapes de démodulation exécutées en parallèle, chacune étant exécutée à la suite d'une étape d'extraction et consistant à démoduler un signal extrait pour en récupérer les données.

11. Procédé de transmission de signaux de très haute fréquence, comprenant :
- une étape de choix d'une fréquence de transmission,
- une étape d'émission de signaux à ladite fréquence de transmission choisie,
- une étape de réception des signaux,
**caractérisé en ce que** ladite étape de réception des signaux est effectuée selon le procédé de réception de la revendication 10.

12. Emetteur de signaux de très haute fréquence destiné à la mise en oeuvre du procédé de transmission selon la revendication 11, comprenant :
- un transmetteur (52) adapté pour désigner une fréquence de transmission,
- un module de communication (54) adapté pour recevoir une requête de transmission dudit transmetteur (52) à ladite fréquence de transmission désignée,
**caractérisé en ce que** ledit module de communication (54) comprend un sous-module de détermination de la disponibilité des fréquences de transmission et un sous-module d'émission de signaux air/sol adapté pour émettre lesdits signaux à une fréquence :
- égale à la fréquence de transmission désignée si celle-ci est valide,
- égale à une fréquence définie par ledit module de détermination si la fréquence de transmission désignée n'est pas valide, ledit choix étant effectué en fonction de la disponibilité des fréquences de transmission.
